# EUROPEAN PATENT SPECIFICATION

(11) **EP 0 832 023 B1**
(45) Date of publication and mention of the grant of the patent: **29.03.2000**
(21) Application number: 96921162.2
(22) Date of filing: 01.07.1996
(51) Int. Cl.: B62B 3/00, B29C 65/00, A47B 31/06

(54) **SERVING TROLLEY**
SERVIERWAGEN
CHARIOT DE SERVICE

(30) Priority: 29.06.1995 NL 1000688
(43) Date of publication of application: 01.04.1998
(73) Proprietor: Flex Concepts B.V., 2611 JR Delft (NL); Werkvoorziening Midden-Gelderland, 6826 CC Arnhem (NL)
(72) Inventor: VERBRUGGE, Jeroen, Klaasjan, NL-3151 TB Hoek Van Holland (NL); LEWERISSA, Ronald, Michiel, NL-2584 ER Den Haag (NL)
(74) Representative: Eveleens Maarse, Pieter
(86) International application number: NL9600271
(87) International publication number: WO9701475

(56) References cited:
- EP-A- 0 066 547
- DE-A- 1 451 079
- FR-A- 1 454 444
- FR-A- 2 228 353
- FR-A- 2 654 057
- GB-A- 1 034 110
- US-A- 3 906 744

## Description

The invention relates to a serving trolley with a substantially rectangular configuration and comprising a pair of parallel side walls, a top plate and a bottom plate, wherein the length of the side walls is substantially longer than the distance between the side walls, wherein at least the two side walls are each formed by a "sandwich" plate comprising a plastic inner wall, a plastic outer wall and an internal foam layer, wherein the inner wall is provided with horizontally extending support ridges.

Such a serving trolley is known from FR-A-2654057.

Such serving trolleys are often subjected to rough handling; as a result of turbulence or as a result of incorrect steering by staff these trolleys frequently collide with seats.

This means that the walls are subjected to great forces as a result of the relatively great weight of the serving trays with material stacked thereon present on the support ridges.

It is pointed out here that the standard requirement is that in horizontal direction transversely of the direction of the side walls it must be possible to withstand accelerations up to 3 G without damage.

The trolley known in the prior art does not comply with this requirement without further additional steps.

Sandwich plates which have a relatively large surface area and wherein, except for the edges, the inner wall and the outer wall are connected only by a layer of foam, do not have sufficient strength. Particularly when there is great surface pressure from inside the inner wall is insufficiently rigid to withstand the relevant forces.

The object of the present invention is therefore to provide such a serving trolley, wherein side plates of sufficient strength are obtained while retaining the support ridges.

This object is achieved in that the support ridges are interrupted along substantially vertically extending channels lying in the plane of the inner plate.

This has the result that at the position of the vertical channels the inner plate is flat. When a sufficient width is chosen for these flat vertical channels the thus formed flat parts acquire sufficient strength and rigidity to be able to withstand the forces occurring in the case of inward pressure.

Furthermore, such trolleys are often heavily laden; they are frequently filled with trays with meals, with bottles or cans of drink, of considerable weight. This means that such trolleys are subject to great forces whereby particularly at the corner joints mutually connecting the various plates these joints loosen and after a number of years the trolley will become warped. This also impairs the appearance of such trolleys.

Moreover, despite the fact that it is manufactured from aluminium, such a trolley is generally heavy.

According to a preferred embodiment the serving trolley comprises two bent formed pieces each formed integrally, wherein according to a particularly recommended embodiment each of the bent pieces comprises a side wall and half a top plate and half a bottom plate.

As a result of these steps a construction is obtained with a great rigidity, so that such a trolley is prevented from becoming warped even when it is heavily laden and subject to great accelerations.

The present invention will now be elucidated with reference to the annexed drawings, in which:
figure 1 shows a perspective view of a serving trolley according to the invention;
figure 2 shows a view corresponding with figure 1 wherein a door of the serving trolley has been opened;
figure 3 shows a cross sectional view along the line III-III in figure 1;
figure 4 shows a longitudinal cross section along the line IV-IV in figure 3;
figure 5 shows a section along the line V-V of the door construction of the serving trolley;
figure 5a shows a detailed view corresponding with figure 5 with a partially opened door;
figure 5b shows a detailed view corresponding with figure 5 with a fully opened door;
figure 6 shows a sectional view corresponding with figure 3 of a first variant; and
figure 7 shows a detailed sectional view of a second variant.

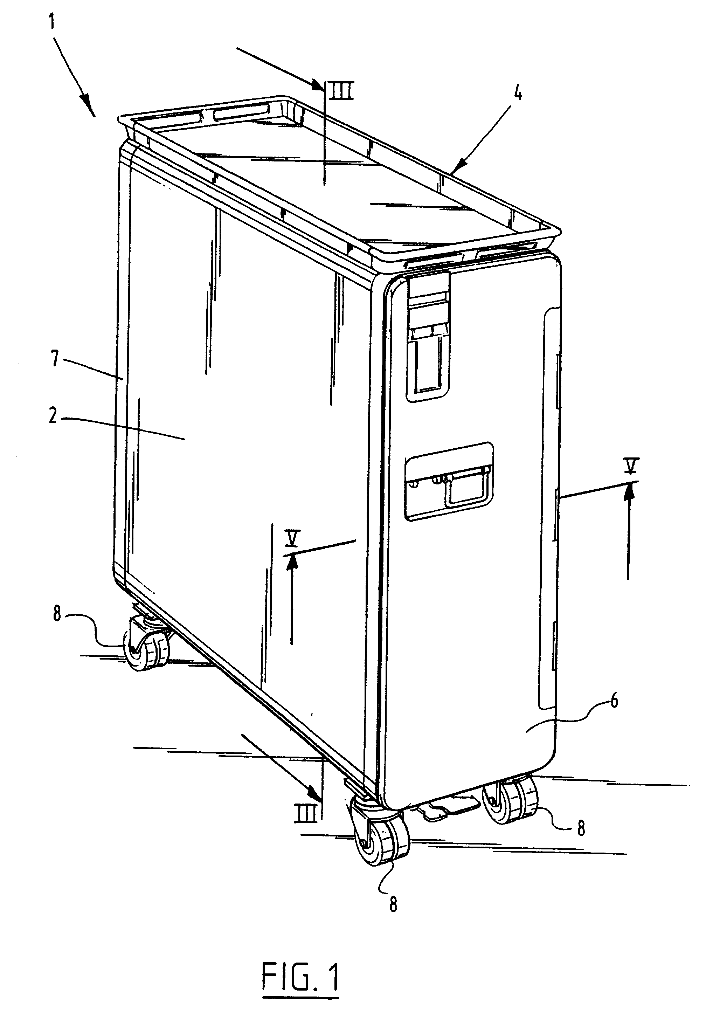

In figure 1 is shown a serving trolley 1 which is formed by two side walls 2,3, a top plate 4, a bottom plate 5 not visible in figure 1, and two door 6,7.

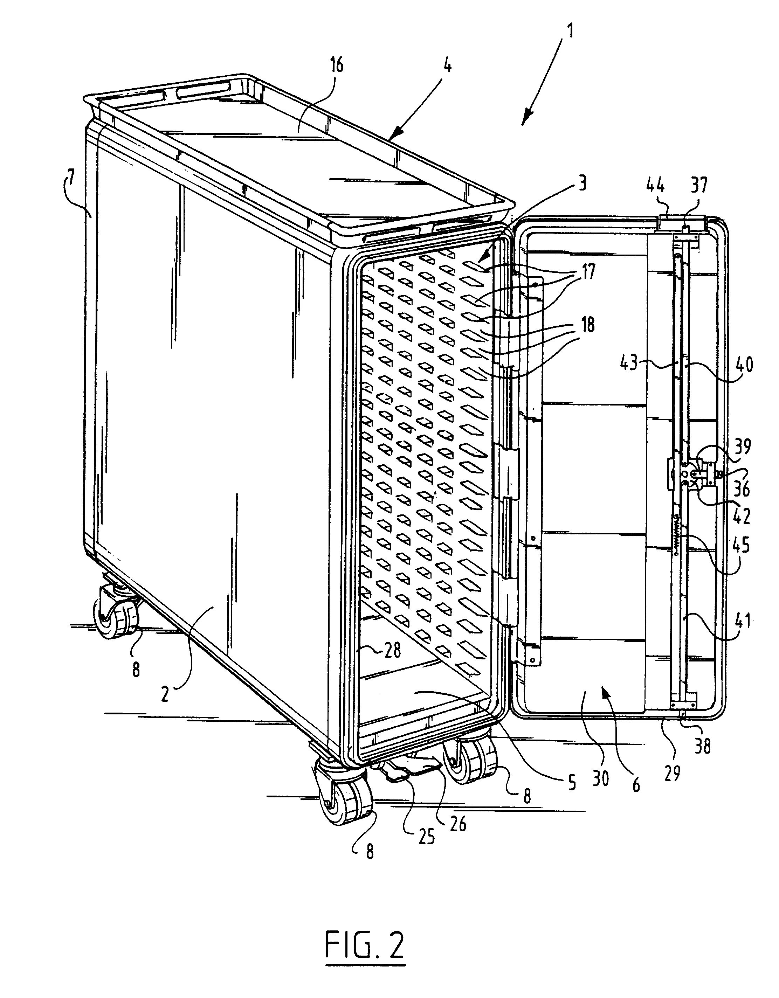

In figure 2 the same serving trolley 1 is shown wherein the door 6 is open and wherein the interior of the trolley is partially visible. The trolley is fixed on castors 8, the construction of which will be elucidated hereinbelow.

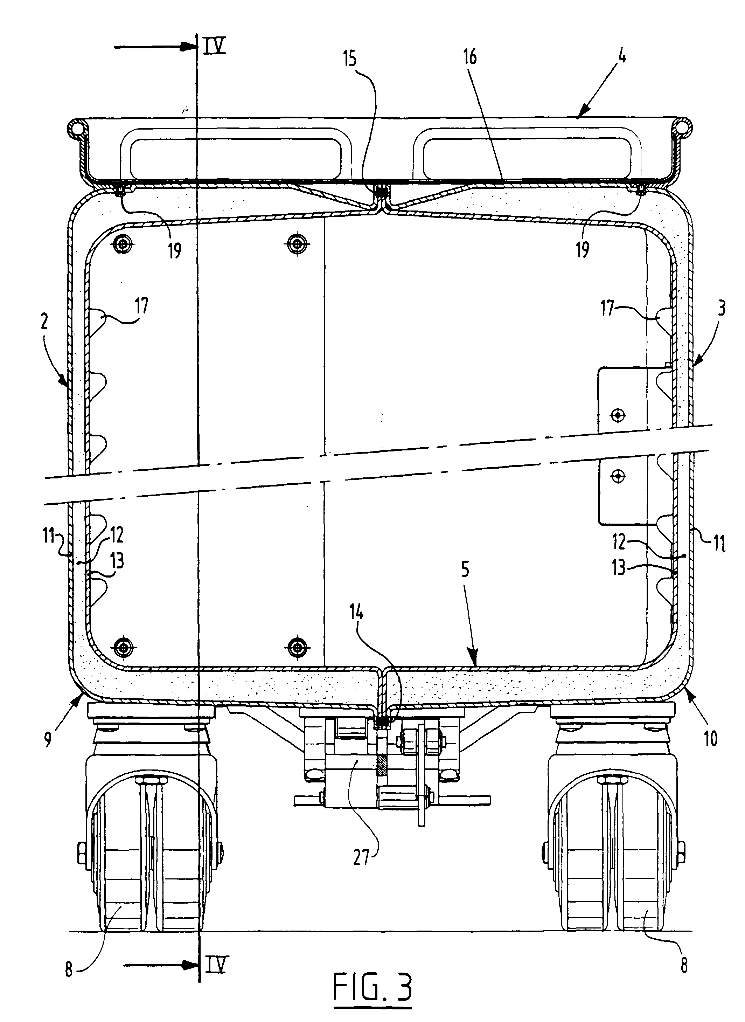

Figure 3 shows how the side walls are formed by bent formed pieces 9,10. The left-hand formed piece 9 is formed by a sandwich panel, the outside of which is formed by an outer wall 11 manufactured from a hard plastic, a layer of foam 12 and an inner wall 13 also manufactured from hard plastic. The right-hand formed piece 10 is constructed in the same manner.

Because it is manufactured from hard plastic the outer wall 11 is not sensitive to collisions of the serving trolley with for instance seats, walls or other objects, thus preventing dents or damage from occurring.

The hard plastic is further coloured through and through, so that any damage in the form of scratches will likewise not result in an adverse effect on the appearance. It is noted here that modern techniques enable the hard plastic layer to be provided with any random colour, so that the walls of such a trolley can be made in the colours of the house-style of the transport company concerned. It is also possible with modern techniques to arrange a logo for instance in the side wall.

The two formed pieces 9,10 each form a side wall 2 respectively 3 and each form half the top plate 4 and each half the bottom 5. Each of the formed pieces thus has a U-shaped configuration. For assembly of the relevant formed pieces into a trolley they are joined together by means of gluing or welding. For this purpose the outer wall 11 and the inner wall 13 of each of formed pieces 9 and 10 are bent downward at the bottom so that they make mutual contact without insertion of the foam layer. These are possibly already connected to each other during manufacture of the two formed pieces, for example by welding, for instance ultra-sonic welding, or by gluing. When the two formed pieces are joined together such a treatment is carried out once again so that, as figure 3 shows, a triple weld is created; this comprises outer wall 11 of formed piece 9, inner wall 13 of formed piece 9, inner wall 13 of formed piece 10 and outer wall 11 of formed piece 10. Thus formed here is a weld 14 which extends along the entire length of the trolley. This weld extends to below the bottom surface of bottom plate 5.

A similar construction is formed on the top side. This differs however in the fact that toward the mutually facing edges of formed pieces 9,10 these formed pieces are narrowed on the top side. This makes it possible to arrange the weld 15 arranged on the upper part beneath the level of the top plate 4.

A tray 16 can thus be fixed onto the top plate 4 as shown in the drawing. Drinks and food for serving can be placed on this tray 16, which is preferably manufactured from aluminium but which can equally be manufactured from other materials, for instance plastic.

As shown in figure 3, and as can also be seen in figure 2, ridges 17 moulded on the inner wall 13 are arranged on the inside of both formed pieces 9,10, which ridges are intended to support trays for arranging in the serving trolley. Vertically extending channels 18 pass through each of these ridges as shown in figure 2. During cleaning of the trolley these channels have the object of draining away from the ridges the water used during cleaning. This prevents the water remaining on the ridges, whereby an excessively long drying time of the trolley would occur after cleaning.

The tray 16 is otherwise fixed onto the formed pieces 9,10 by means of blind rivets 19; it is of course possible to use other fixing methods, for example glueing.

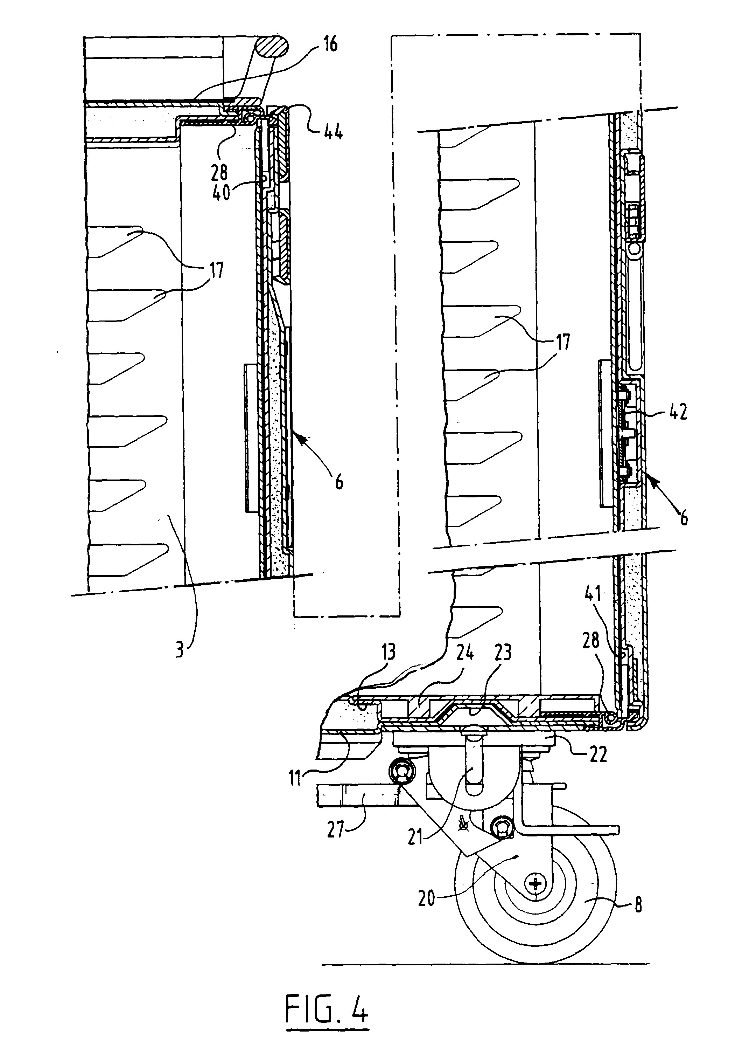

In figure 4 can be seen that the castors 8 are mounted in a pivotable holder 20 which can pivot on a shaft 21. It is pointed out here that such castor constructions are generally known, so that they are not further discussed here. The shaft 21 is fixedly mounted on a plate 22 which is fixed to the part of one of the formed pieces 9,10 forming half the bottom.

At the position of the mounting of bottom plate 22 the relevant formed piece 9,10 is formed such that the outer wall 11 and the inner wall 13 make mutual contact and are jointly provided with a raised portion 23. At the position of raised portion 23 a wheel fixing plate 24 made for instance of aluminium is arranged on the inside of the bottom, which plate fits over raised portion 23 and whereby the position of plate 24 is fixed. Plate 24 is connected to plate 22 by means of a connection (not shown in the drawing) which can be formed for example by a screw connection. Since plate 24 extends over the full width of the trolley, additional fixation of both formed pieces is moreover obtained.

It is further pointed out that in order to block rotation of the castors a blocking device is arranged which can be operated by means of pedals 25,26. It is also pointed out here that such blocking devices are generally known in the relevant field of the art.

Another aspect is the fact that in the case of both formed pieces 9,10 the outer wall 11 and the inner wall 13 are not only mutually connected at the weld seams 14,15 but also on their front and rear part respectively. This is elucidated in the foregoing with reference to the fixing of castors 8. This is also the case at the top, as is shown in the top half of figure 4. Both formed pieces are connected at their ends to a collar 28 for attachment of the doors 6,7. This collar 28 once again mutually connects both formed pieces 9,10 and fulfills the function of frame for the doors 6,7. The collar 28 is of course preferably manufactured from aluminium and extends on both sides, on the top part and on the bottom part of the door.

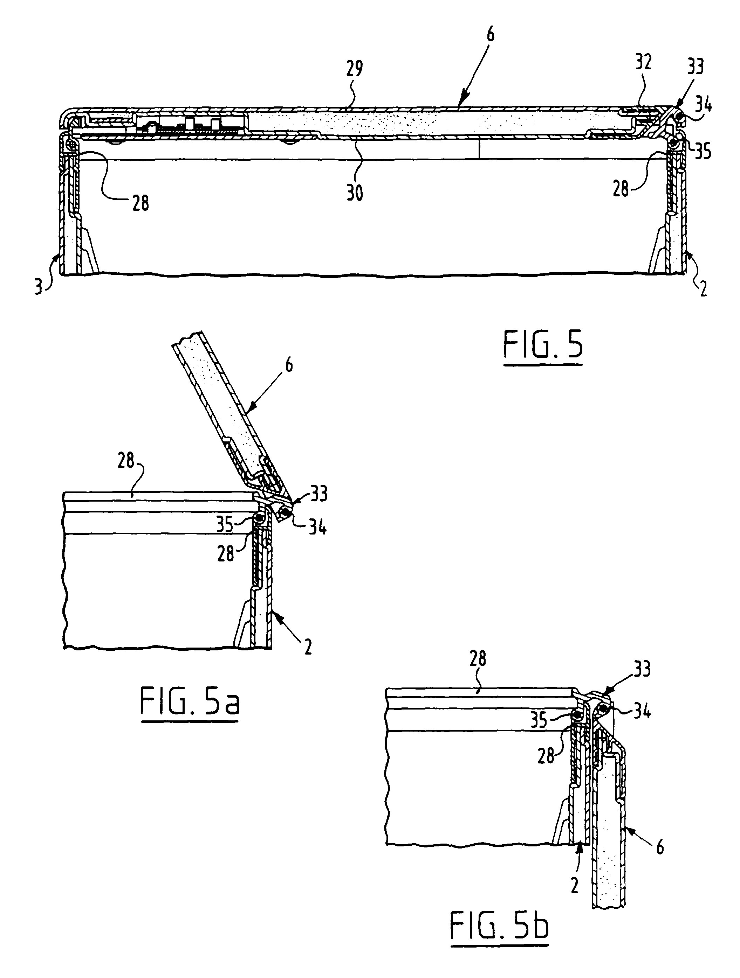

The construction of the door will now be elucidated with reference to figures 5, 5a and 5b. Reference is also made herein to figure 2. The door 6 is formed by a sandwich panel which is once again formed by an outer wall 29 and an inner wall 30 which are at least partially separated by a foam layer 31. The outer wall 29 and the inner wall 30 are mutually connected on their edges. Use is also made here of for instance a weld connection.

This whole assembly is held in an aluminium frame 32 which is connected on the hinged side to a hinge piece 33 provided with two pivot shafts 34 respectively 35. The first pivot shaft 34 connects hinge piece 33 to door 6, and the second pivot shaft 35 connects hinge piece 33 to collar 28. By utilizing both pivot shafts it is possible to rotate door 6 to a position completely parallel to side wall 2, as shown in figure 5b. The rotation will herein initially take place on pivot shaft 35 until this has reached its maximum deflection as shown in figure 5a, wherein the remaining rotation is executed round pivot shaft 34.

The door 6 can be locked in the collar 28 by means of three bolts 36,37,38. The bolts are connected by means of rods 39,40,41 to a central disc 42. Each of the bolts 36,37,38 are moved by rotating this central disc 42. To cause central disc 42 to rotate, use is made of a control rod 43 which extends upward from the central disc and which is connected to a handle 44. This handle 44 extends on the top part of door 6. The control rod 43 is connected on the side remote from handle 44 to a draw spring 45. Each of these elements is arranged in a corresponding thickening in the inner wall 29 of the door. The spring 45 ensures that the bolts are normally arranged in the position locking the door.

By operating handle 44 the bolts are released so that the door can be opened. The bolts 36,37,38 are of course provided with chamfering so that the door can be pressed to its locked position without operating handle 44.

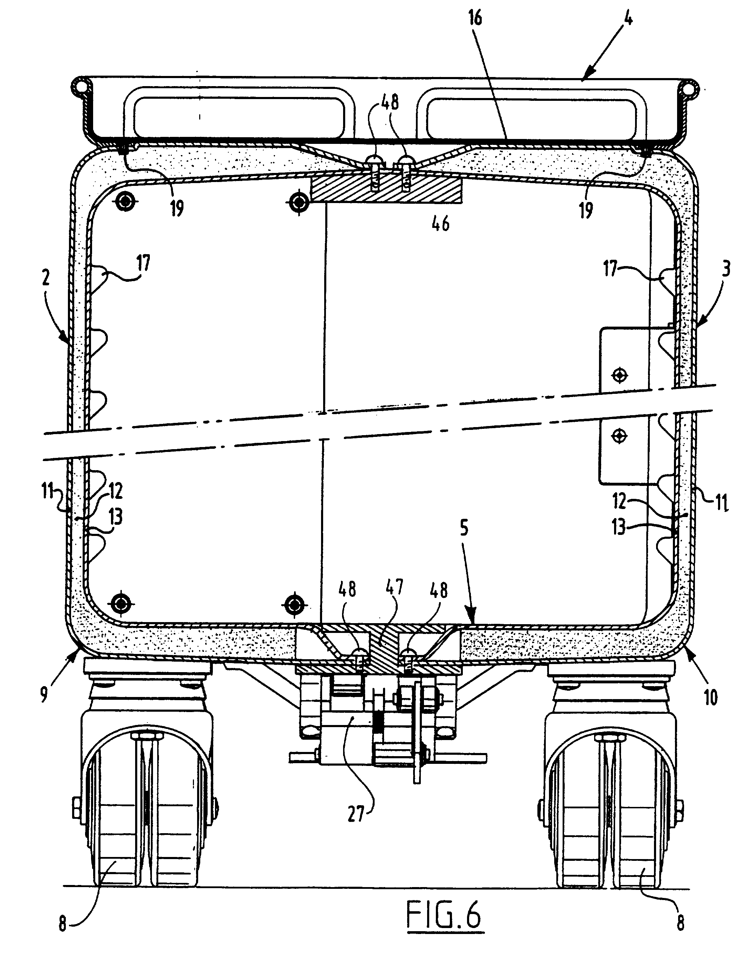

Figure 6 shows an embodiment wherein, as in the embodiment described up to this point, use is made of formed pieces with a U-shaped cross section. The difference from the original embodiment lies in the fact in the present embodiment the two formed pieces are not connected to each other directly but by interposing of a beam 46 extending on the top inside the formed pieces and a beam with a T-shaped section 47 extending on the bottom. It is possible to obtain extra sturdiness by mutually connecting both beams by means of a substantially vertically extending connecting beam which extends exactly in the centre of the serving trolley. At the top both edges of the formed pieces 2,3 are connected to the top beam 46 by means of self-tapping screws 48. It is of course possible to make use of other fixing means, for instance glue. Use is likewise made of self-tapping screws 48 on the underside. Here also it is possible to make use of other fixing means. Both beams 46,47 can be manufactured of for instance aluminium but it is equally possible to make use for this purpose of for instance plastics reinforced with carbon fibres.

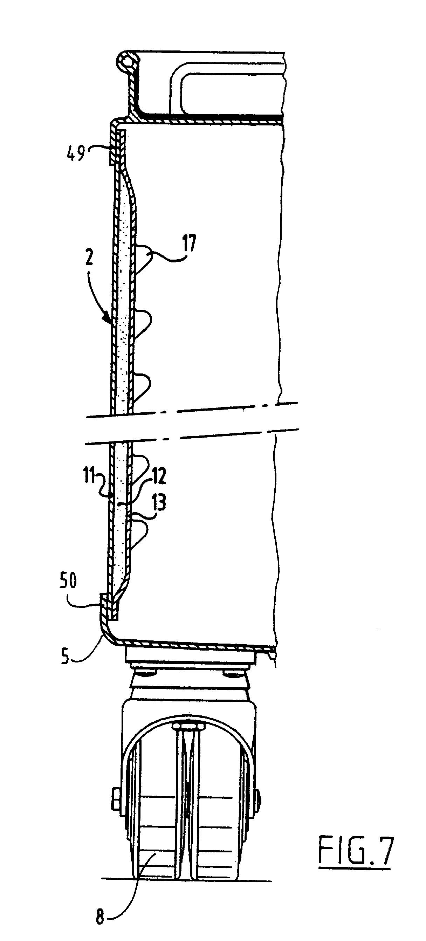

Finally, figure 7 shows an embodiment wherein the side plate 2 extends only in vertical direction, and therefore no longer constitutes a formed piece. This embodiment is important in indicating that the step of breaking up the support ridges 17 is also applicable in the case flat sandwich panels. The form of the top plate 4 is altered in order to fix the flat sandwich panels. This plate is provided along its sides with a downward extending skirt 49 on the inside of which is arranged sandwich panel 2. Various fixing methods can also be used here, for example by means of screwing, gluing or clamping.

The same applies for the bottom part. Here is a bottom plate 5 which is provided on its edges with upward extending skirts 50, to the inside of which is fixed sandwich panel 2. It will be apparent that it is equally possible to fix the sandwich panel to the outside of the relevant skirts and that other fixing methods can be used along the edges.

## Claims

1. Serving trolley (1) with a substantially rectangular configuration and comprising a pair of parallel side walls (2,3), a top plate (4) and a bottom plate (5), wherein the length of the side-walls (2,3) is substantially longer than the distance between the side walls (2,3), wherein at least the two side walls (2,3) are each formed by a "sandwich" plate comprising a plastic inner wall (13), a plastic outer wall (11) and an internal foam layer (12), and wherein the inner wall (13) is provided with horizontally extending support ridges (17), **characterized in that** the support ridges (17) are interrupted along substantially vertically extending channels lying partially in the plane of the inner wall (13).

2. Serving trolley as claimed in claim 1,
**characterized in that** the serving trolley comprises two bent formed pieces (9,10) each formed integrally, and each comprising a side wall (2,3) and half a top plate (4) and half a bottom plate (5).

3. Serving trolley as claimed in claim 1 or 2,
**characterized in that** the plastic walls (11,13) are coloured through and through.

4. Serving trolley as claimed in claim 1 or 2,
**characterized in that** at the edges of the sandwich plate the inner and outer walls (11,13) thereof are mutually connected (14,15).

5. Serving trolley as claimed in one of the preceding claims, **characterized in that** the pieces (9,10) are bent upward on their top and bottom side and that the thus parallel edges are mutually connected (14,15).

6. Serving trolley as claimed in claim 5,
**characterized in that** on the top side the pieces (9,10) are narrowed in the vicinity of their end edge and that a covering plate (16) is arranged on both halves of the top plate (4).

7. Serving trolley as claimed in any of the foregoing claims and comprising castors (8) connected to the bottom plate (5), **characterized in that** the thickness of the bottom plate (5) at the position of the castors (8) is thinner than elsewhere, that a support plate (24) is arranged on the top side of the bottom plate (5) and that the castors (8) are mounted pivotally on wheel plates (22) fixed on the underside of the bottom plate (5) and connected to the support plate (24) through the bottom plate (5).

## Patentansprüche

1. Servierwagen (1) mit einer im wesentlichen rechteckigen Gestalt, der zwei parallele Seitenwände (2, 3), eine Deckplatte (4) und eine Bodenplatte (5) aufweist, wobei die Länge der Seitenwände (2, 3) beträchtlich größer ist als der Abstand zwischen den Seitenwänden (2, 3), wobei wenigstens die beiden Seitenwände (2, 3) als "Sandwich"-Tafel ausgebildet sind, die eine aus Plastikmaterial bestehende Innenwand (13), eine aus Plastikmaterial bestehende Außenwand (11) und eine innere Schaumstoffschicht (12) aufweist, und wobei die Innenwand (13) mit horizontal verlaufenden Tragstegen (17) versehen ist,
dadurch gekennzeichnet, daß die Tragstege (17) längs im wesentlichen vertikal verlaufender Kanäle unterbrochen sind, die teilweise in der Ebene der Innenwand (13) liegen.

2. Servierwagen nach Anspruch 1,
dadurch gekennzeichnet, daß der Servierwagen zwei gebogene Formstücke (9, 10) aufweist, die jeweils integral ausgebildet sind und von denen jeder Teil aus einer Seitenwand (2, 3), einer halben Deckplatte (4) und einer halben Bodenplatte (5) besteht.

3. Servierwagen nach Anspruch 1 oder 2,
dadurch gekennzeichnet, daß die Plastikwände (11, 13) durchgehend eingefärbt sind.

4. Servierwagen nach Anspruch 1 oder 2,
dadurch gekennzeichnet, daß an den Rändern der Sandwich-Tafel die inneren und äußeren Wände (11, 13) dieser Tafel miteinander verbunden sind (14, 15).

5. Servierwagen nach einem der vorhergehenden Ansprüche, dadurch gekennzeichnet, daß die Formteile (9, 10) an ihrer Oberseite und ihrer Unterseite aufgebogen sind, und daß die so gebildeten parallelen Ränder miteinander verbunden sind (14, 15) .

6. Servierwagen nach Anspruch 5,
dadurch gekennzeichnet, daß die Oberseite der Formteile (9, 10) in der Nähe ihres Endrandes verjüngt ausgebildet sind, und daß eine Abdeckplatte (16) auf den beiden Hälften der Deckplatte (4) angeordnet ist.

7. Servierwagen nach einem der vorhergehenden Ansprüche, welcher Lenkrollen (8) aufweist, die an der Bodenplatte (5) montiert sind,
dadurch gekennzeichnet, daß die Dicke der Bodenplatte (5) an der Stelle der Lenkrollen (8) dünner als an anderen Stellen ausgebildet ist, daß eine Trägerplatte (24) auf der Oberseite der Bodenplatte (5) angeordnet ist, und daß die Lenkrollen (8) schwenkbar an Radplatten (22) gelagert sind, die auf der Unterseite der Bodenplatte (5) festgelegt und mit der Trägerplatte (24) über die Bodenplatte (5) verbunden sind.

## Revendications

1. Chariot de service (1) présentant une configuration sensiblement rectangulaire et comprenant deux parois latérales parallèles (2, 3), un plateau supérieur (4) et un plateau inférieur (5), selon lequel la longueur des parois latérales (2,3) est sensiblement supérieure à la distance entre les parois latérales (2, 3), selon lequel au moins les deux parois (2,3) sont chacune formées par une plaque en "sandwich" comprenant une paroi intérieure de plastique (13), une paroi extérieure de plastique (11) et une couche de mousse interne (12), et selon lequel la paroi intérieure (13) est pourvue de nervures de support (17) s'étendant dans le sens horizontal, caractérisé en ce que les nervures de support (17) sont interrompues le long de canaux s'étendant dans un sens sensiblement vertical, partiellement dans le plan de la paroi interne (13).

2. Chariot de service selon la revendication 1, caractérisé en ce que le chariot de service comprend deux pièces recourbées (9, 10) formées de manière solidaire et comprenant chacune une paroi latérale (2,3) et un demi plateau supérieur (4) et un demi plateau inférieur (5).

3. Chariot de service selon la revendication 1 ou la revendication 2, caractérisé en ce que les parois de plastiques (11, 13) sont teintées dans la masse.

4. Chariot de service selon la revendication 1 ou la revendication 2, caractérisé en ce qu'au niveau des bords de la plaque en sandwich, les parois intérieure et extérieure (11, 13) de cette dernière sont mutuellement reliées (14, 15).

5. Chariot de service selon l'une quelconque des revendications précédentes, caractérisé en ce que les pièces (9, 10) sont recourbées vers le haut sur leurs côtés supérieur et inférieur et en ce que les bords ainsi parallèles sont mutuellement reliés (14, 15).

6. Chariot de service selon la revendication 5, caractérisé en ce que sur le côté supérieur, les pièces (9, 10) sont rétrécies dans le voisinage de leur bord d'extrémité et en ce qu'un plateau de couverture (16) est prévu sur les deux moitiés du plateau supérieur (4).

7. Chariot de service selon l'une quelconque des revendications précédentes, et comprenant des roulettes (8) reliées au plateau inférieur (5), caractérisé en ce que l'épaisseur du plateau inférieur (5) au niveau des roulettes (8) est plus mince que dans tout autre endroit, en ce qu'une plaque de support (24) est prévue sur le côté supérieur du plateau inférieur (5) et en ce que les roulettes (8) sont montées en vue de leur pivotement sur les plaques de roues (22) fixées sur le côté inférieur du plateau inférieur (5) et reliées à la plaque de support (24) par le biais de la plaque inférieure (5).
